# EUROPÄISCHE PATENTSCHRIFT

(11) **EP 2 898 520 B1**
(45) Veröffentlichungstag und Bekanntmachung des Hinweises auf die Patenterteilung: **19.10.2016**
(21) Anmeldenummer: 13763259.2
(22) Anmeldetag: 19.09.2013
(51) Int. Cl.: H01H 9/16, H01H 71/04, H01H 71/66, H02H 1/00

(54) **SCHALTVORRICHTUNG MIT ANTENNENANSCHLUSS FÜR DRAHTLOSE KOMMUNIKATION**
SWITCHING DEVICE WITH AN ANTENNA CONNECTION FOR WIRELESS COMMUNICATION
APPAREIL DE COMMUTATION AVEC UNE CONNEXION D'ANTENNE POUR UNE COMMUNICATION SANS FIL

(30) Priorität: 20.09.2012 DE 102012108845
(43) Veröffentlichungstag der Anmeldung: 29.07.2015
(73) Patentinhaber: Eaton Electrical IP GmbH & Co. KG, 12529 Schönefeld (DE)
(72) Erfinder: JAGUSCH, Lothar, 53123 Bonn (DE)
(74) Vertreter: Eaton IP Group EMEA
(86) Internationale Anmeldenummer: PCT/EP2013/069430
(87) Internationale Veröffentlichungsnummer: WO 2014/044736

(56) Entgegenhaltungen:
- EP-A1- 1 432 098
- EP-A1- 2 485 230
- DE-U1-202004 012 469
- US-A1- 2007 080 143

## Beschreibung

Die Erfindung betrifft eine Schaltvorrichtung mit einem Schaltschrank, einem Schaltgerät, das in dem Schaltschrank angeordnet ist, einer Schnittstelle zur drahtlosen Kommunikation sowie einer Antenne.

Schaltgeräte können mit Schnittstellen zur drahtlosen Kommunikation ausgestattet sein, um Informationen über Betriebsparameter der Schaltgeräte drahtlos verfügbar zu machen. Ein zusätzlicher Vorteil solcher Anordnungen ergibt sich aus der Möglichkeit, ein derart ausgestaltetes Schaltgerät jeweils ortsunabhängig bedienbar zu gestalten. Zudem kann der Verdrahtungsaufwand der Schaltvorrichtung bei Verwendung drahtloser Kommunikationstechnik reduziert werden.

Die Wechselwirkung der Funkübertragungssignale mit einem Schaltschrankgehäuse des Schaltschrankes kann sich jedoch in solchen Schaltvorrichtungen als problematisch erweisen.

Die DE 100 66 242 B4 offenbart beispielsweise einen kommunikationsfähigen Leistungsschalter. Die Kommunikationsfähigkeit wird dadurch erreicht, dass der Leistungsschalter eine Schnittstelle zur Funkdatenübertragung aufweist. Die Schnittstelle zur Funkdatenübertragung ist im Gehäuse des Leistungsschalters angeordnet.

Wird ein solcher Leistungsschalter im Schaltschrank angebracht, so kann die Funkdatenübertragung im Allgemeinen nicht durchgeführt werden, weil das meist aus Metall ausgeführte Schaltschrankgehäuse die Funksignale durch Abschirmung stört. Die von der innerhalb des Schaltschrankes angeordneten Schnittstelle zur Funkdatenübertragung gesendeten Funksignale werden an einer Innenwand des Schalschrankgehäuses größtenteils reflektiert und können so zur Datenübermittlung nicht verwendet werden.

In der DE 10 2004 002 330 A1 wird ein System zur Datenübertragung in Schaltanlagen beschrieben. Das System umfasst einen im Schaltschrank angeordneten Leistungsschalter. Der Leistungsschalter ist mittels eines Feldbusses mit einer Funkschnittstelle verbunden, wobei die Funkschnittstelle sich außerhalb des Schaltschrankes befindet. Zwischen der Funkschnittstelle und geeigneten Datenverarbeitungseinrichtungen, wie eine Notebook oder einem PDA mit einer eigenen Funkschnittstelle können auf diese Weise Daten, insbesondere Daten zur Überwachung des Leistungsschalters, leitungslos übertragen werden.

Durch die Anordnung der Funkschnittstelle außerhalb des Schaltschrankgehäuses kann die Abschirmung durch das Schaltschrankgehäuse vermieden werden. Anderseits steigt durch die notwendige Verdrahtung des Leistungsschalters mit der Funkschnittstelle der Material- und Planungsaufwand des Systems entsprechend nachteilig.

Die Aufgabe der vorliegenden Erfindung ist es daher, eine Schaltvorrichtung der eingangs genannten Art vorzuschlagen, bei der eine Störung der drahtlosen Datenübertragung durch das Schaltschrankgehäuse bzw. der Verdrahtungsaufwand gegenüber den herkömmlichen Schaltvorrichtungen vermindert werden kann.

Die DE 20 2004 012 469 U1, die als nächstliegender Stand der Technik angesehen wird, offenbart eine Schutzschalteranordnung mit einer Anzahl von Schutzschaltern, die ein Bedienelement aufweisen, das zum Auslösen des jeweiligen Schutzschalters durch eine Bedienfront hindurchgeführt und von deren Frontseite aus betätigbar ist, wobei jedem Schutzschalter ein ebenfalls von der Frontseite der Bedienfront aus zugängliches Koppelelement zum Austausch von Diagnose- und/oder Parametrierdaten zugeordnet ist.

Die Aufgabe wird durch die Schaltvorrichtung mit der Merkmalskombination des Patentanspruchs 1 gelöst. Die Patentansprüche 2 bis 6 stellen weitere vorteilhafte Ausführungsformen der Erfindung dar.

Dementsprechend zeichnet sich die erfindungsgemäße Schaltvorrichtung dadurch aus, dass die Schnittstelle zur drahtlosen Kommunikation und die Antenne als zwei separate Teile ausgebildet sind und die Schnittstelle mit der Antenne verbunden ist, wobei die Schnittstelle innerhalb eines Gehäuses des Schaltgerätes angeordnet ist und die Antenne zumindest teilweise in ein durch das Schaltschrankgehäuse hindurchgreifendes Bedienelement des Schaltgerätes integriert ist. Insbesondere muss damit die Schnittstelle nicht über ein eigenes, darin integriertes Antennenelement verzügen. Zur Durchführung der drahtlosen Datenübermittlung wird die mit der Schnittstelle leitungsverbundene, in das Bedienelement integrierte Antenne verwendet.

Im Sinne der vorliegenden Erfindung greift das Bedienelement durch das Schaltschrankgehäuse hindurch, wenn ein Teil des Bedienelements aus dem Schaltschrankgehäuse herausragt oder das Bedienelement in eine Öffnung im Schaltschrankgehäuse hineinragt.

Durch eine geeignete Anordnung der Antenne in oder am Bedienelement, beispielsweise innerhalb eines Teilabschnitts des Bedienelements, der aus dem Schaltschrankgehäuse herausragt oder in die Öffnung im Schaltschrankgehäuse hineinragt, kann erreicht werden, dass die Störung der Funkübertragung durch unerwünschte Reflexionen am Schaltschrankgehäuse vermindert wird. Zugleich muss die Schaltvorrichtung nicht durch zusätzliche, miteinander zu verbindende Module erweitert werden, da die Antenne in bereits bestehende Teile integriert ist. Der Herstellungs- und Verdrahtungsaufwand ist somit gegenüber den herkömmlichen Schaltvorrichtungen vorteilhaft reduziert.

Der Vorteil der Ausbildung der Schnittstelle zur drahtlosen Kommunikation und der zugehörigen Antenne als zwei separate, miteinander beispielsweise mittels eines geeigneten Verbindungskabels verbindbare Teile ergibt sich insbesondere daraus, dass die Antenne geringe Ausmaße und einen einfachen Aufbau aufweisen kann, so dass sie besonders gut in das Bedienelement eingebaut werden kann. Die Schnittstelle zur drahtlosen Kommunikation mit der darin enthaltenen Elektronik kann dann beispielsweise innerhalb eines Gehäuses des Schaltgeräts angeordnet und mit diesem einteilig ausgebildet sein.

Gemäß einer Ausführungsform der Erfindung umfasst das Bedienelement einen Schalthebel. Der Schalthebel ist zu einer manuellen Betätigung bzw. Bedienung des Schalters vorgesehen. Der Schalthebel ragt zumindest teilweise aus dem Schaltschrankgehäuse aus, so dass er für einen sich außerhalb des Schaltschrankes befindenden Verwender zugänglich ist. Das Schaltschrankgehäuse weist in diesem Fall eine Öffnung auf, durch die der Schalthebel greifen kann. Die mit der Schnittstelle zur drahtlosen Kommunikation verbundene Antenne ist zumindest teilweise in den Schalthebel integriert.

Gemäß einer weiteren Ausführungsform umfasst das Bedienelement einen Drehgriff bzw. einen Drehknopf. In diesem Fall ist die Antenne zumindest teilweise in den Drehgriff bzw. Drehknopf integriert.

Des Weiteren kann das Bedienelement einen Fernantrieb umfassen, mittels dessen das Schaltgerät fernbedient werden kann. In diesem Fall kann die Antenne in den Fernantrieb integriert sein.

In einigen Fällen ist der Schalthebel, der Drehgriff oder die anderen zum Bedienen des Schaltgerätes verwendete Teile derart aufgebaut bzw. das Schaltgerät derart im Schaltschrank angeordnet, dass das Bedienelement ohne ein Verlängerungsteil nicht durch das Schaltschrankgehäuse dringt. In solchen Fällen kann das Bedienelement außer dem Schalthebel einen Aufsatz umfassen, der beispielsweise mit dem Schalthebel, dem Drehgriff oder einem anderen Teil des Bedienelements verbunden, zum Beispiel auf den Schalthebel aufgesetzt und/oder festgeschraubt werden kann. Der Aufsatz stellt dann eine geeignete Verlängerung des Schalthebels dar. Der Aufsatz ist dabei derart ausgestaltet, dass er zumindest teilweise aus dem Schaltschrankgehäuse herausragt. Durch die geeignete Anordnung der Antenne in dem Aufsatz kann die bei der Datenübertragung störende Abschirmung der Funkwellen durch das Schaltschrankgehäuse vermieden werden.

Ist die Antenne nicht im Schalthebel selbst integriert, dann kann der Schalthebel eine Kupplung aufweisen, die über das Verbindungskabel mit der Elektronik der Schnittstelle zur drahtlosen Kommunikation verbunden ist. Die Antenne kann dann als Aufsatz in diese Kupplung eingesteckt werden. Umfasst das Bedienelement statt des Schalthebels ein anderes Zubehörteil, wie zum Beispiel einen Drehgriff oder einen Fernantrieb, so kann der Aufsatz die Antenne beinhalten, die über eine Zuleitung ebenfalls an die Kupplung angeschlossen wird. Auch in diesen Fällen kann die Antenne zumindest teilweise außerhalb des Schaltschrankgehäuses angeordnet werden.

Der Aufsatz kann darüber hinaus mit weiteren Funktionalitäten ausgestattet sein. Zum Beispiel kann der Aufsatz von außerhalb des Schaltschrankes sichtbare Anzeigeelemente umfassen. Auf diese Weise kann die Bedienung des Schaltgerätes weiter erleichtert werden.

Es kann von Vorteil sein, wenn die Information über den Betriebszustand des Schaltgerätes auch dann noch vom Funkmodul zur Verfügung gestellt werden kann, wenn das Schaltgerät ausgelöst wird bzw. einer Störung unterliegt. Im Fall der Auslösung, beispielsweise Überlast-Auslösung, und/oder der Störung ist eine Energieversorgung des Schaltgerätes unter Umständen unterbrochen. Daher kann die Schnittstelle zur drahtlosen Kommunikation mit einer Energieversorgung ausgestattet werden, die von der Energieversorgung des Schaltgerätes unabhängig ist. Diese kann beispielsweise über einen eigenen GND/+24VDC-Anschluss an der Schnittstelle erfolgen. Fällt die Energieversorgung des Schaltgerätes aus, so kann die Schnittstelle über die eigene Energieversorgung weiter mit Strom versorgt werden. Ferner kann mittels der Schnittstelle in diesem Fall über die eigene zugeführte Energieversorgung das Schaltgerät weiter mit Energie versorgen und somit weiterhin Daten aus dem ausgeschalteten Schaltgerät abrufen.

Die Schnittstelle zur drahtlosen Kommunikation kann ferner dazu geeignet ausgebildet sein, ein von einem Sender übermitteltes Steuersignal zu empfangen und/oder zu verarbeiten und/oder an das Schaltgerät weiter zu leiten. Damit kann die Schaltvorrichtung nicht nur drahtlos überwacht, sondern auch drahtlos gesteuert werden.

Zur Kommunikation zwischen der Schnittstelle und dem Empfangsgerät/Sender kann Bluetooth oder ein entsprechend geeigneter weiterer Funkstandard verwendet werden. Auch kann die Schnittstelle mit der Antenne zur WLAN-Kommunikation geeignet ausgebildet sein. Das externe Empfangs-/Sendegerät kann beispielsweise durch einen Smartphone, einen Tablet-PC, Pager oder ein ähnliches Gerät mit der entsprechenden Programmierung realisiert sein.

Die Antenne kann beispielsweise als Stab-Antenne ausgebildet sein. Sie kann die Richtcharakteristik eines Kugelstrahlers aufweisen, wobei die optimale Richtcharakteristik der Antenne im Allgemeinen von dem konkreten Einsatzbereich der Schaltvorrichtung abhängt.

Im Folgenden wird die vorliegende Erfindung anhand der Figuren 1 bis 3 weiter erläutert.
- Figur 1:: zeigt eine schematische Darstellung möglicher Anordnungen einer Antenne einer Schaltvorrichtung;
- Figur 2:: zeigt eine Ausführungsform der erfindungsgemäßen Schaltvorrichtung in schematischer Darstellung;
- Figur 3:: zeigt eine weitere Ausführungsform der erfindungsgemäßen Schaltvorrichtung in schematischer Darstellung.

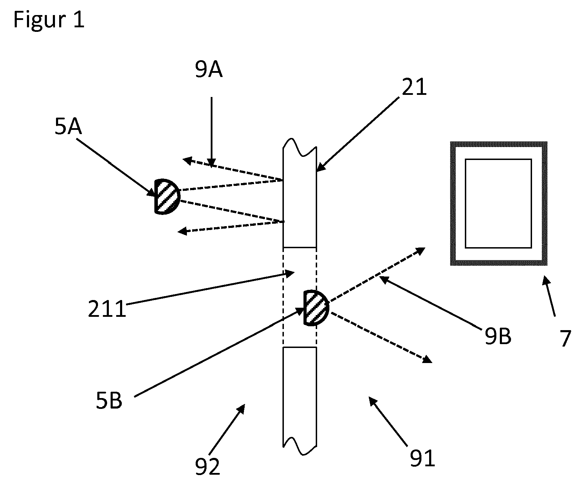

Im Einzelnen soll in der Figur 1 durch eine schematische Darstellung möglicher Anordnungen einer Antenne 5A, 5B bezüglich des Schaltschrankgehäuses 21 eine der Erfindung zugrunde liegende Überlegung erläutert werden.

Über die Antenne 5A, 5B sollen Informationen von einem in Figur 1 nicht dargestellten, mit der Antenne 5A, 5B verbundenen Schaltgerät an ein externes Empfangsgerät 7 übermittelt werden.

Die Antenne 5A ist in einem Innenbereich 92 eines Schaltschrankes angeordnet. Der Innenbereich 92 ist vom Außenbereich 91 des Schaltschrankes im Wesentlichen durch das Schaltschrankgehäuse 21 (in Figur 1 teilweise dargestellt) getrennt. Das Empfangsgerät 7 befindet sich im Außenbereich 91.

Von der Antenne 5A ausgehend werden Funkwellen gesendet. Die Ausbreitungsrichtung der Funkwellen ist in Figur 1 durch unterbrochene Linien 9A angedeutet. Wie aus der Darstellung der Figur 1 deutlich hervorgeht, werden die Funkwellen an dem Schaltschrankgehäuse 21 weitgehend reflektiert, so dass sie das Empfangsgerät 7 nicht erreichen können. In diesem Fall ist eine drahtlose Kommunikation zwischen dem mit der Antenne 5A verbundenen Schaltgerät und dem Empfangsgerät 7 erheblich gestört.

Die Antenne 5B ist in einer Öffnung 211 im Schaltschrankgehäuse 21 angeordnet, so dass die Antenne 5B teilweise aus dem Schaltschrankgehäuse 21 herausragt. Die von der Antenne 5B ausgehend gesendeten Funkwellen breiten sich insbesondere in die durch die unterbrochenen Linien 9B angedeuteten Richtungen aus. Die Funkwellen können hierbei das Empfangsgerät 7 erreichen, weil das Schaltschrankgehäuse 21 sich nicht als ein Hindernis zwischen der Antenne 5B und dem Empfangsgerät 7 erstreckt. Eine Datenübertragung zwischen der Antenne 5B und dem Empfangsgerät 7 ist in diesem Fall gut durchführbar.

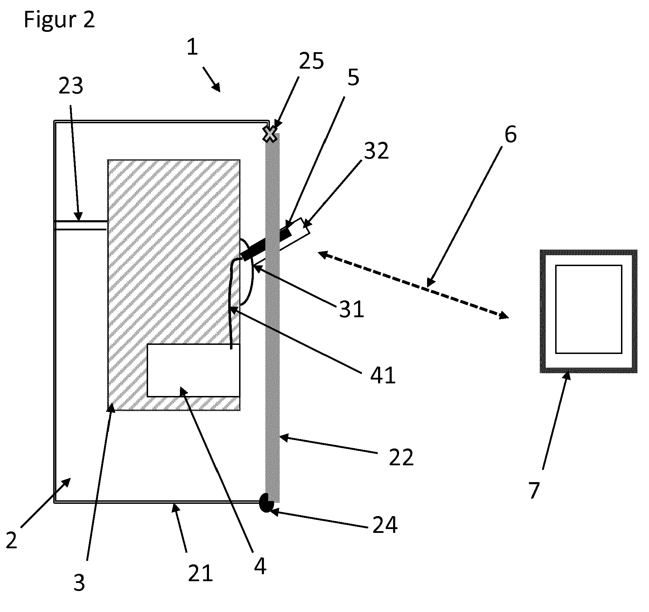

Figur 2 zeigt eine erfindungsgemäße Schaltvorrichtung 1 in einer schematischen Darstellung.

Die Schaltvorrichtung 1 der Figur 2 umfasst einen Schaltschrank 2 mit einem Schaltschrankgehäuse 21. Das Schaltschrankgehäuse 21 weist eine Schaltschranktür 22 auf. Die Schaltschranktür ist mittels eines Scharniers 24 einseitig drehbar montiert. Der Schaltschrank 2 kann mittels einer Schließvorrichtung 25 verschlossen werden.

Ferner umfasst die Schaltvorrichtung 1 ein Schaltgerät 3, das im Schaltschrank 2 angeordnet und mittels geeigneter Befestigungsmittel 23 am Schaltschrankgehäuse 21 befestigt ist. Das Schaltgerät 3 kann dabei ein Leistungsschalter, ein Motorschutzschalter oder dergleichen sein. Das Schaltgerät 3 ist bei verschlossenem Schaltschrank 2 vor unerlaubtem Zugriff gesichert. Das Schaltgerät 3 ist ferner mit einem Bedienelement 31 ausgestattet. Das Bedienelement 31 weist einen Schalthebel 32 auf, der zur manuellen Bedienung des Schaltgerätes 3 dient. Der Schalthebel 32 ragt teilweise aus dem Schaltschrankgehäuse 21 heraus, so dass das Schaltgerät 3 auch bei verschlossenem Schaltschrank 2 von außerhalb des Schaltschrankgehäuses 21 bedienbar ist.

Des Weiteren umfasst die Schaltvorrichtung 1 eine Schnittstelle 4 zur drahtlosen Kommunikation, beispielsweise eine Bluetooth-Schnittstelle. Die Schnittstelle 4 ist hierbei mit der zugehörigen Elektronik in das Schaltgerät 3 integriert. Es ist aber im Allgemeinen ebenfalls möglich, die Schnittstelle 4 vom Schaltgerät 3 getrennt jedoch verbindbar auszubilden. Die Schnittstelle 4 ist dazu vorgesehen, Daten mit dem externen Gerät 7 drahtlos auszutauschen. Das externe Empfangs-/Sendegerät 7 kann beispielsweise ein Smartphone sein. Dazu verfügt die Schnittstelle 4 über Mittel zum Versenden, Empfangen und zur elektronischen Verarbeitung der ausgetauschten Daten. Ferner ist die Schnittstelle 4 geeignet, dem Schaltgerät 3 entnommene Informationen, beispielsweise Parameter dessen Betriebszustandes, zu verarbeiten.

Die Schnittstelle 4 zur drahtlosen Kommunikation ist mittels eines Verbindungskabels 41 mit der Antenne 5 verbunden. Die Antenne 5 ist im Bedienelement 31 integriert, wobei die Antenne 5 teilweise in einen im Schalthebel 32 ausgebildeten Hohlraum eingesetzt ist. Die Antenne 5 ist dazu vorgesehen, durch Aussenden und/oder Empfangen von Funkwellen an der drahtlosen Kommunikation zwischen der Schnittstelle 4 und dem externen Empfangs-/Sendegerät 7 mitzuwirken, was mit der unterbrochen Linie 6 mit Doppelpfeil angedeutet ist.

Die Antenne 5 ist derart angeordnet, dass sie teilweise aus dem Schaltschrankgehäuse 21 herausragt. Dies hat zur Folge, dass die zwecks Datenübertragung von der Antenne 5 aus in Richtung des Empfangsgerätes 7 gesandten Funkwellen nicht vom Schaltschrankgehäuse 21 abgeschirmt werden, so dass die Kommunikation weitgehend störungsfrei verlaufen kann.

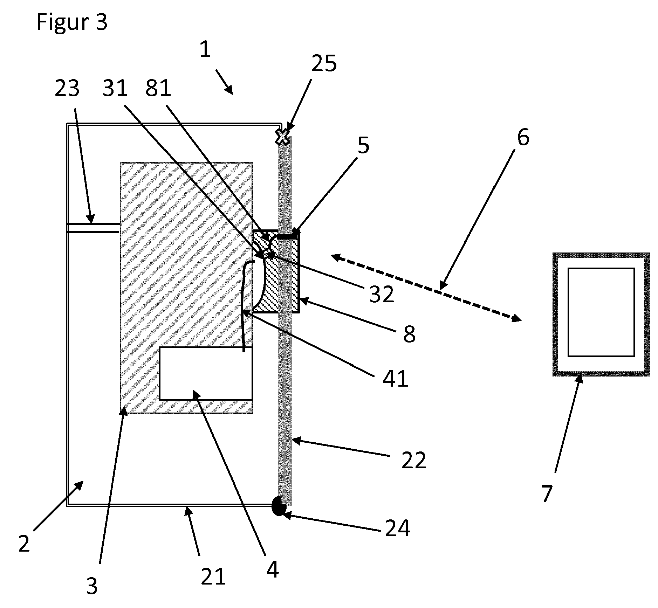

In Figur 3 ist eine weitere Ausführungsform der erfindungsgemäßen Schaltvorrichtung 1 in einer schematischen Darstellung gezeigt. Die in Figur 2 gezeigte Ausführungsform entspricht weitgehend der in Figur 2 dargestellten, wobei sich die beiden Ausführungsbeispiele durch die Ausbildung des Bedienelements 31 unterscheiden.

In den Figuren 2 und 3 sind gleichen oder gleichartigen Teilen gleiche Bezugsziffern zugeordnet. Zur Vermeidung von Wiederholungen werden solche Teile ferner nicht mehrmals gesondert erläutert, sofern dies nicht zum Verständnis der Erfindung erforderlich ist.

In der in Figur 3 dargestellten Ausführungsform der Schaltvorrichtung 1 umfasst das Bedienelement 31 den Schalthebel 32, der in der gezeigten Anordnung nicht aus dem Schaltschrankgehäuse 21 herausragt. In diesem Fall umfasst das Bedienelement 31 zusätzlich einen Aufsatz 8, der über eine geeignete Kupplung (nicht dargestellt) mit dem Schalthebel 32 verbunden ist. Der Aufsatz 8 ragt seinerseits aus dem Schaltschrankgehäuse 21 heraus. Die Antenne 5 ist in den Aufsatz 8 integriert und darin derart angeordnet, dass die Antenne 5 teilweise ebenfalls aus dem Schaltschrankgehäuse 21 herausragt. Die Verbindung zwischen der Antenne 5 und dem Schalthebel 31 ist über eine Verbindungsleitung 81 hergestellt.

### Bezugszeichentabelle

- 1: Schaltvorrichtung
- 2: Schaltschrank
- 21: Schaltschrankgehäuse
- 211: Öffnung
- 22: Schaltschranktür
- 23: Befestigungsmittel
- 24: Scharnier
- 25: Schließvorrichtung
- 3: Schaltgerät
- 31: Bedienelement
- 32: Schalthebel
- 4: Schnittstelle zur drahtlosen Kommunikation
- 41: Verbindungskabel
- 5: Antenne
- 5A,5B: Antenne
- 6: Linie
- 7: externes Gerät
- 8: Aufsatz
- 81: Verbindungsleitung
- 9A: Linie
- 9B: Linie
- 91: Außenbereich des Schaltschrankes
- 92: Innenbereich des Schaltschrankes

## Patentansprüche

1. Schaltvorrichtung (1), umfassend einen Schaltschrank (2) mit einem Schaltschrankgehäuse (21), ein Schaltgerät (3), das im Schaltschrank (2) angebracht ist, eine Schnittstelle (4) zur drahtlosen Kommunikation sowie eine Antenne (5), wobei die Schnittstelle (4) mit der Antenne (5) verbunden ist und die Antenne (5) zumindest teilweise in ein durch das Schaltschrankgehäuse (21) hindurchgreifendes Bedienelement (31) des Schaltgerätes (3) integriert ist, **dadurch gekennzeichnet, dass** die Schnittstelle (4) zur drahtlosen Kommunikation und die Antenne (5) als zwei separate Teile ausgebildet sind, wobei die Schnittstelle (4) innerhalb eines Gehäuses des Schaltgeräts (3) angeordnet ist.

2. Schaltvorrichtung (1) nach Anspruch 1, **dadurch gekennzeichnet, dass** das Bedienelement (31) einen Schalthebel (32) umfasst, der Schalthebel (32) zumindest teilweise aus dem Schaltschrankgehäuse (2) herausragt, wobei die Antenne (5) zumindest teilweise in den Schalthebel (32) integriert ist.

3. Schaltvorrichtung (1) nach Anspruch 1, **dadurch gekennzeichnet, dass** das Bedienelement (31) einen Drehgriff umfasst, wobei die Antenne (5) zumindest teilweise in den Drehgriff integriert ist.

4. Schaltvorrichtung (1) nach einem der vorangehenden Ansprüche, **dadurch gekennzeichnet, dass** das Bedienelement (31) einen Fernantrieb umfasst, wobei die Antenne (5) zumindest teilweise in den Fernantrieb integriert ist.

5. Schaltvorrichtung (1) nach einem der vorangehenden Ansprüche, **dadurch gekennzeichnet, dass** das Bedienelement (31) des Schaltgerätes (3) einen Aufsatz (8) umfasst, wobei der Aufsatz (8) zumindest teilweise aus dem Schaltschrankgehäuse (21) herausragt und die Antenne (5) zumindest teilweise in den Aufsatz (8) integriert ist.

6. Schaltvorrichtung (1) nach einem der vorangehenden Ansprüche, **dadurch gekennzeichnet, dass** die Schnittstelle (4) zur drahtlosen Kommunikation über eine von der Energieversorgung des Schaltgerätes (3) unabhängige Energieversorgung verfügt.

## Claims

1. A switching device (1), comprising a switchgear cabinet (2) with a switchgear cabinet housing (21), a switchgear (3) disposed in the switchgear cabinet (2), an interface (4) for wireless communication, and an antenna (5), wherein the interface (4) is connected with the antenna (5) and the antenna (5) is at least partially integrated in a control element (31) of the switchgear (3), the control element extending through the switchgear cabinet housing (21), **characterized in that**
the interface (4) for wireless communication and the antenna (5) are formed as two separate parts, wherein
the interface (4) is arranged inside a housing of the switchgear (3).

2. The switching device (1) according to claim 1, **characterized in that** the control element (31) comprises a switch lever (32), the switch lever (32) at least partially protruding from the switchgear cabinet housing (2), wherein the antenna (5) is at least partially integrated in the switch lever (32).

3. The switching device (1) according to claim 1, **characterized in that** the control element (31) comprises a rotatable handle, wherein the antenna (5) is at least partially integrated in the rotatable handle.

4. The switching device (1) according to any of the preceding claims, **characterized in that** the control element (31) comprises a remote controller, wherein the antenna (5) is at least partially integrated in the remote controller.

5. The switching device (1) according to any of the preceding claims, **characterized in that** the control element (31) of the switchgear (3) comprises a cap (8), wherein the cap (8) at least partially protrudes from the switchgear cabinet housing (21) and the antenna (5) is at least partially integrated in the cap (8).

6. The switching device (1) according to any of the preceding claims, **characterized in that** the interface (4) for wireless communication comprises a power supply which is independent of the power supply of the switchgear (3).

## Revendications

1. Dispositif de commutation (1) comprenant une armoire de distribution (2) avec une enceinte d'armoire (21), un appareil de commutation (3), qui est monté dans l'armoire de distribution (2), une interface (4) pour la communication sans fil ainsi qu'une antenne (5), dans lequel l'interface (4) est connectée à l'antenne (5) et l'antenne (5) est au moins en partie intégrée à un élément de commande (31) de l'appareil de commutation (3) traversant l'enceinte d'armoire (21), **caractérisé en ce que** l'interface (4) pour la communication sans fil et l'antenne (5) se présentent sous la forme de deux parties séparées, dans lequel l'interface (4) est agencée dans un boîtier de l'appareil de commutation (3).

2. Dispositif de commutation (1) selon la revendication 1, **caractérisé en ce que** l'élément de commande (31) comprend un levier de commutation (32), le levier de commutation (32) dépasse au moins en partie de l'enceinte d'armoire (2), dans lequel l'antenne (5) est intégrée au moins en partie au levier de commutation (32).

3. Dispositif de commutation (1) selon la revendication 1, **caractérisé en ce que** l'élément de commande (31) comprend une poignée tournante, dans lequel l'antenne (5) est intégrée au moins en partie à la poignée tournante.

4. Dispositif de commutation (1) selon l'une quelconque des revendications précédentes, **caractérisé en ce que** l'élément de commande (31) comprend une commande à distance, dans lequel l'antenne (5) est intégrée au moins en partie à la commande à distance.

5. Dispositif de commutation (1) selon l'une quelconque des revendications précédentes, **caractérisé en ce que** l'élément de commande (31) de l'appareil de commutation (3) comprend un chapeau (8), dans lequel le chapeau (8) dépasse au moins en partie de l'enceinte d'armoire (21) et l'antenne (5) est intégrée au moins en partie au chapeau (8).

6. Dispositif de commutation (1) selon l'une quelconque des revendications précédentes, **caractérisé en ce que** l'interface (4) pour la communication sans fil dispose d'une source d'énergie indépendante de la source d'énergie de l'appareil de commutation (3).
